# EUROPEAN PATENT SPECIFICATION

(11) **EP 2 765 822 B1**
(45) Date of publication and mention of the grant of the patent: **29.06.2016**
(21) Application number: 12837742.1
(22) Date of filing: 02.10.2012
(51) Int. Cl.: H04W 48/02

(54) **METHOD AND APPARATUS FOR CONTROLLING USER EQUIPMENT ACCESS IN WIRELESS COMMUNICATION SYSTEM**
VERFAHREN UND VORRICHTUNG ZUR STEUERUNG DES ZUGANGS EINER BENUTZERVORRICHTUNG IN EINEM DRAHTLOSEN KOMMUNIKATIONSSYSTEM
PROCÉDÉ ET APPAREIL POUR CONTRÔLER L'ACCÈS D'UN ÉQUIPEMENT UTILISATEUR DANS UN SYSTÈME DE COMMUNICATION SANS FIL

(30) Priority: 03.10.2011 US 201161542798 P
(43) Date of publication of application: 13.08.2014
(73) Proprietor: LG Electronics Inc., Seoul 150-721 (KR)
(72) Inventor: LEE, Young Dae, Anyang-si Gyeonggi-do 431-749 (KR); YI, Seung June, Anyang-si Gyeonggi-do 431-749 (KR); JUNG, Sung Hoon, Anyang-si Gyeonggi-do 431-749 (KR); PARK, Sung Jun, Anyang-si Gyeonggi-do 431-749 (KR)
(74) Representative: Frenkel, Matthias Alexander
(86) International application number: PCT/KR2012/007991
(87) International publication number: WO 2013/051840

(56) References cited:
- US-A1- 2010 184 448
- HUAWEI ET AL: "EAB applicability", 3GPP DRAFT; R2-114984 EAB APPLICABILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 2 October 2011 (2011-10-02), XP050540657, [retrieved on 2011-10-02]
- MEDIATEK: 'EAB and Connection Establishment Cause' 3GPP TSG-RAN2 #75 MEETING 22 August 2011, XP050539994
- 3GPP TS 25.331 V6.6.0 June 2005, page 65, XP050367983
- '3rd Generation Partnership Project;Technical Specification Group Services and System Aspects;Service accessibility; (Release 11)' 3GPP TS 22.011 V11.0.0 June 2011, XP050553344

## Description

### BACKGROUND OF THE INVENTION

### Field of the Invention

The present invention relates to wireless communications, and more particularly, to a method and apparatus for controlling an access of a user equipment in a wireless communication system.

### Related Art

A universal mobile telecommunications system (UMTS) is a 3^{rd} generation asynchronous mobile communication system operating in wideband code division multiple access (WCDMA) on the basis of European systems such as global system for mobile communications (GSM), general packet radio services (GPRS), etc. Long-term evolution (LTE) of the UMTS is under discussion by 3^{rd} generation partnership project (3GPP) which standardizes the UMTS. The 3GPP LTE is a technique for high-speed packet communication. The 3GPP LTE requires cost reduction for a user and a provider, improvement of service quality, extended and improved coverage and system capacity, flexible use of frequency bands, a simple structure, an open interface, a proper power use of a terminal, etc. For this, various methods have been proposed.

A user equipment (UE) can communicate with an evolved-NodeB (eNB) after establishing a radio resource control (RRC) connection. When a user initially powers on the UE, the UE first searches for a proper cell and thereafter stays in an RRC idle state (RRC_IDLE) in the cell. When there is a need to establish an RRC connection, the UE staying in RRC_IDLE establishes the RRC connection with an RRC layer of a network through an RRC connection procedure and then transitions to an RRC connected state (RRC_CONNECTED). There are various cases where the UE in RRC_IDLE state needs to establish the RRC connection. For example, when uplink data transmission is necessary due to telephony attempt of the user or the like, or when a response message is transmitted in response to a paging message received from the network, the UE needs to establish the RRC connection with the RRC layer of the network.

Meanwhile, an access of the UE to the eNB may be limited according to a situation. This may be called access barring. With an introduction of various types of devices such as a machine type communication (MTC) device, etc., the access barring needs to be performed effectively.

Techniques pertaining to extended access barring in connection with a user equipment have been described in Huawei et al.: "EAB applicability". 3GPP Draft, R2-114984, vol. RAN WG2, no. Zhuhai.

### SUMMARY OF THE INVENTION

The present invention provides a method and apparatus for controlling an access of a user equipment in a wireless communication system. The present invention also provides a method of performing access class barring (ACB) directly without performing extended access barring (EAB) if an radio resource control (RRC) establishment cause is mobile terminating (MT) in an RRC connection procedure.

In an aspect, a method for controlling an access of a user equipment (UE) in a wireless communication system according to claim 1 is provided. The method includes
receiving, by the UE from a base station, first access control information including a public land mobile network, PLMN, information of the UE to which a first access control is applied;
comparing, by the UE, the PLMN information of the UE with a PLMN selected by the UE;
determining, by the UE, whether or not a specific condition exists, the specific condition comprising the UE is answering to paging; and
performing, by the UE, the first access control based on the first access control information except when the specific condition is determined to exist.

In another aspect, a user equipment (UE) in a wireless communication system according to claim 14 is provided. The UE includes
a radio frequency, RF, unit for transmitting or receiving a radio signal; and
a processor operatively coupled to the RF unit and configured to:
receive first access control information including a public land mobile network, PLMN, information of the UE to which a first access control is applied from a base station,
compare the PLMN information of the UE with a PLMN selected by the UE;
determine whether or not a specific condition exists, the specific condition comprising the UE is answering to paging, and
perform the first access control based on the first access control information except when the specific condition is determined to exist.

It is possible to solve a problem in which a user equipment does not respond to a paging message for a long period of time.

### BRIEF DESCRIPTION OF THE DRAWINGS

FIG. 1 is a block diagram showing a wireless communication system.
FIG. 2 is a block diagram showing a radio protocol structure.
FIG. 3 shows an example of a physical channel structure.
FIG. 4 shows transmission of a paging channel.
FIG. 5 shows a basic structure and communication scenario of MTC.
FIG. 6 shows an example of a UE access control method according to an embodiment of the present invention.
FIG. 7 is a block diagram showing a wireless communication system to implement an embodiment of the present invention.

### DESCRIPTION OF EXEMPLARY EMBODIMENTS

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802.20, evolved UTRA (E-UTRA), etc. IEEE 802.16m is evolved from IEEE 802.16e, and provides backward compatibility with a system based on the IEEE 802.16e. The UTRA is a part of a universal mobile telecommunication system (UMTS). 3^{rd} generation partnership project (3GPP) long term evolution (LTE) is a part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

For clarity, the following description will focus on LTE-A. However, technical features of the present invention are not limited thereto.

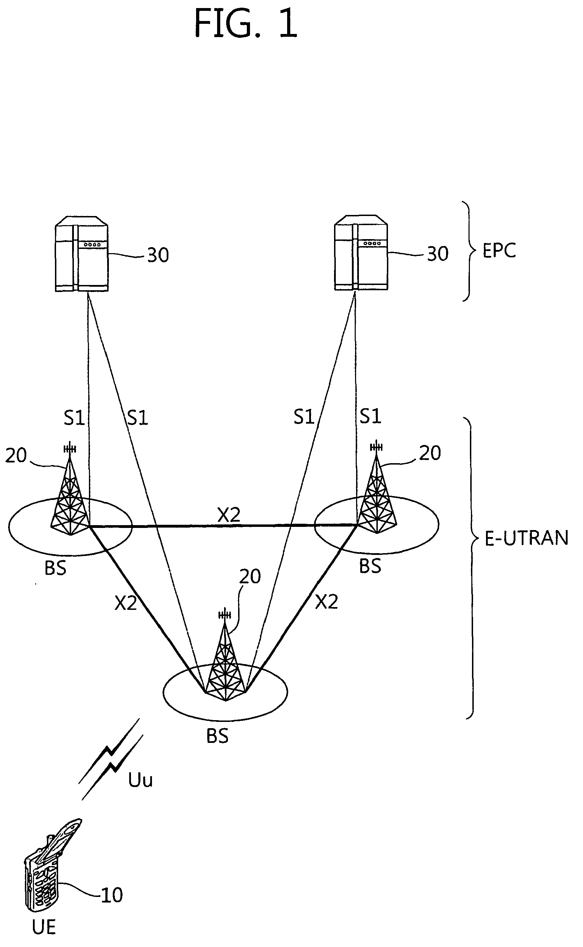

FIG. 1 is a block diagram showing a wireless communication system.

The structure of FIG. 1 is an example of a network structure of an evolved-UMTS terrestrial radio access network (E-UTRAN). An E-UTRAN system may be a 3GPP LTE/LTE-A system. An evolved-UMTS includes a user equipment (UE) 10 and a base station (BS) 20 which provides a control plane and a user plane to the UE. The user equipment (UE) 10 may be fixed or mobile, and may be referred to as another terminology, such as a mobile station (MS), a user terminal (UT), a subscriber station (SS), a wireless device, etc. The BS 20 is generally a fixed station that communicates with the UE 10 and may be referred to as another terminology, such as an evolved node-B (eNB), a base transceiver system (BTS), an access point, etc. There are one or more cells within the coverage of the BS 20. A single cell is configured to have one of bandwidths selected from 1.25, 2.5, 5, 10, and 20 MHz, etc., and provides downlink or uplink transmission services to several UEs. In this case, different cells can be configured to provide different bandwidths.

Interfaces for transmitting user traffic or control traffic may be used between the BSs 20. The BSs 20 are interconnected by means of an X2 interface. The BSs 20 are connected to an evolved packet core (EPC) by means of an S1 interface. More particularly, the BSs 20 are connected to a mobility management entity (MME) 30 by means of an S1-MME, and are connected to a serving gateway (S-GW) by means of S1-U. The S1 interface supports a many-to-many relation between the BS 20 and the MME/S-GW 30. The MME has access information of the UE or capability information of the UE, and such information is generally used for mobility management of the UE. The S-GW is a gateway having an E-UTRAN as an end point. The packet data network (PDN)-GW is a gateway having a PDN as an end point.

Hereinafter, a downlink (DL) denotes communication from the BS 20 to the UE 10, and an uplink (UL) denotes communication from the UE 10 to the BS 20. In the DL, a transmitter may be a part of the BS 20, and a receiver may be a part of the UE 10. In the UL, the transmitter may be a part of the UE 10, and the receiver may be a part of the BS 20.

Layers of a radio interface protocol between the UE and the E-UTRAN can be classified into a first layer (L1), a second layer (L2), and a third layer (L3) based on the lower three layers of the open system interconnection (OSI) model that is well-known in the communication system. The radio interface protocol between the UE and the E-UTRAN can be horizontally divided into a physical layer, a data link layer, and a network layer, and can be vertically divided into a user plane which is a protocol stack for data information transmission and a control plane which is a protocol stack for control signal transmission. Radio protocol layers are present in pair in the UE and the network, and serve for data transmission of a wireless section.

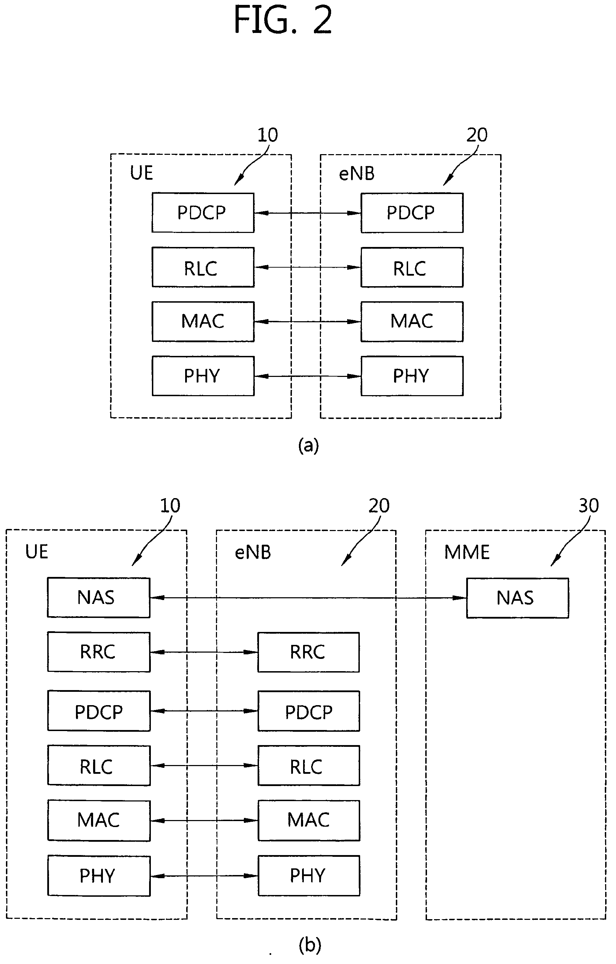

FIG. 2 is a block diagram showing a radio protocol structure. FIG. 2-(a) is a block diagram showing radio protocol architecture for a user plane, and FIG. 2-(b) is a block diagram showing radio protocol architecture for a control plane.

Referring to FIG. 2, a physical (PHY) layer belonging to the L1 provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transmitted through a radio interface. Between different PHY layers, i.e. a PHY layer of a transmitter and a PHY layer of a receiver, data are transferred through the physical channel. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH can carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ ACK/NACK signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

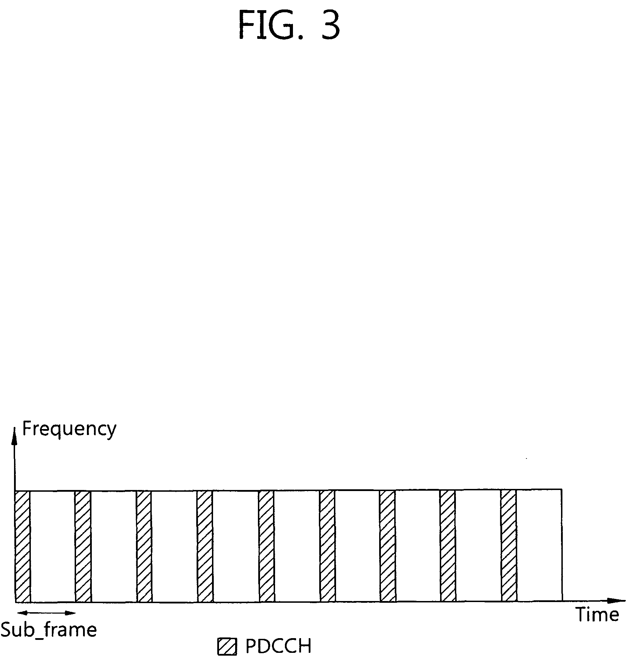

FIG. 3 shows an example of a physical channel structure.

A physical channel consists of a plurality of subframes in a time domain and a plurality of subcarriers in a frequency domain. One subframe consists of a plurality of symbols in the time domain. One subframe consists of a plurality of resource blocks (RBs). One RB consists of a plurality of symbols and a plurality of subcarriers. In addition, each subframe can use specific subcarriers of specific symbols of a corresponding subframe for a PDCCH. For example, a first symbol of the subframe can be used for the PDCCH. A transmission time interval (TTI) which is a unit time for data transmission may be equal to a length of one subframe.

A DL transport channel for transmitting data from the network to the UE includes a broadcast channel (BCH) for transmitting system information, a paging channel (PCH) for transmitting a paging message, a DL-SCH for transmitting user traffic or control signals, etc. The system information carries one or more system information blocks. All system information blocks can be transmitted with the same periodicity. Traffic or control signals of a multimedia broadcast/multicast service (MBMS) are transmitted through a multicast channel (MCH). Meanwhile, a UL transport channel for transmitting data from the UE to the network includes a random access channel (RACH) for transmitting an initial control message, a UL-SCH for transmitting user traffic or control signals, etc.

A MAC layer belonging to the L2 provides a service to a higher layer, i.e. a radio link control (RLC) layer, through a logical channel. A function of the MAC layer includes mapping between the logical channels and the transport channels and multiplexing/de-multiplexing for a transport block provided to a physical channel on a transport channel of a MAC service data unit (SDU) belonging to the logical channel. The logical channels are located above the transport channels, and are mapped to the transport channels. The logical channels can be divided into a control channel for delivering control region information and a traffic channel for delivering user region information.

An RLC layer belonging to the L2 supports reliable data transmission. A function of the RLC layer includes RLC SDU concatenation, segmentation, and reassembly. To ensure a variety of quality of service (QoS) required by a radio bearer (RB), the RLC layer provides three operation modes, i.e. a transparent mode (TM), an unacknowledged mode (UM), and an acknowledged mode (AM). The AM RLC provides error correction by using an automatic repeat request (ARQ). Meanwhile, a function of the RLC layer can be implemented with a functional block inside the MAC layer. In this case, the RLC layer may not exist.

A packet data convergence protocol (PDCP) layer belongs to the L2. A function of a packet data convergence protocol (PDCP) layer in the user plane includes user data delivery, header compression, and ciphering. The header compression has a function for decreasing a size of an IP packet header which contains relatively large-sized and unnecessary control information, to support effective transmission in a radio section having a narrow bandwidth. A function of a PDCP layer in the control plane includes control-plane data delivery and ciphering/integrity protection.

A radio resource control (RRC) layer belonging to the L3 is defined only in the control plane. The RRC layer takes a role of controlling a radio resource between the UE and the network. For this, the UE and the network exchange an RRC message through the RRC layer. The RRC layer serves to control the logical channel, the transport channel, and the physical channel in association with configuration, reconfiguration, and release of RBs. An RB is a logical path provided by the L2 for data delivery between the UE and the network. The configuration of the RB implies a process for specifying a radio protocol layer and channel properties to provide a particular service and for determining respective detailed parameters and operations. The RB can be classified into two types, i.e. a signaling RB (SRB) and a data RB (DRB). The SRB is used as a path for transmitting an RRC message in the control plane. The DRB is used as a path for transmitting user data in the user plane.

An RRC state indicates whether the RRC of the UE is logically connected to the RRC of the network. That is, when the RRC layer of the UE is connected with the RRC layer of the network, the UE is in an RRC connected state (RRC_CONNECTED). Otherwise, if the RRC layer of the UE is not connected with the RRC layer of the network, the UE is in an RRC idle state (RRC_IDLE). The network can recognize the existence of the UE in RRC_CONNECTED in unit of a cell, and can effectively control the UE. Meanwhile, the network cannot recognize the existence of the UE in RRC_IDLE, and a core network (CN) manages the UE in unit of a tracking area (TA) which is a larger area unit than the cell. That is, only the existence of the UE in RRC_IDLE is recognized in unit of the TA, and the UE must transition to RRC_CONNECTED to receive a typical mobile communication service such as voice or data communication.

A non-access stratum (NAS) layer belonging to an upper layer of the RRC layer performs a function of session management, mobility management, or the like. To manage a mobility of the UE in the NAS layer, an EPS mobility management (EMM)-REGISTERED state and an EMM-DEREGISTERED state can be defined. The EMM-REGISTERED state and the EMM-DEREGISTERED state can be applied to the UE and the MME. The UE is initially in the EMM-DEREGISTERED state. To access the network, the UE can perform a process of registering to the network through an initial attach procedure. If the initial attach procedure is successfully performed, the UE and the MME are in the EMM-REGISTERED state.

In addition, to manage a signaling connection between the UE and the EPC, an EPS connection management (ECM)-IDLE state and an ECM-CONNECTED state can be defined. An EMM-IDLE state and an EMM-DISCONNECTED state can also be applied to the MME. When the UE in the ECM-IDLE state establishes an RRC connection to the network, the UE is in the ECM-CONNECTED state. When the MME in the ECM-IDLE state establishes an S1 connection to the network, the MME is in the ECM-CONNECTED state. When the UE is in the ECM-IDLE state, the network does not have UE context information. Therefore, the UE in the ECM-IDLE state can perform a mobility related procedure based on the UE such as cell selection or cell reselection without having to receive a command of the network. On the other hand, if the UE is in the ECM-CONNECTED state, a mobility of the UE is managed by the command of the network. If a location of the UE in the ECM-IDLE state becomes different from a location known to the network, the UE can report the location of the UE to the network through a tracking area update procedure.

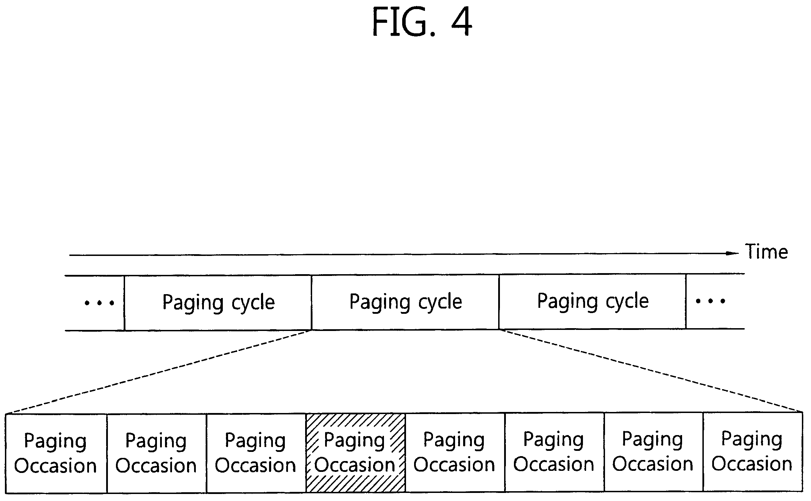

FIG. 4 shows transmission of a paging channel.

When there is data to be transmitted by a network to a specific UE or a call delivered to the specific UE, the paging channel can be used to search and wake up the UE. To transmit the paging message, the network determines a certain location area in which the UE is currently located, and transmits the paging message through one cell belonging to the location area in which the UE is located. For this, whenever there is a change in the location area, the UE reports to the network that the location area is changed, which can be called a location area update procedure.

In addition, the UE which receives the paging message can perform discontinuous reception (DRX) for the purpose of decreasing power consumption. For this, the network can configure a plurality of paging occasions for every time period called a paging cycle, and a specific UE can acquire the paging message by receiving only a specific paging occasion. Referring to FIG. 4, one paging cycle consists of 8 paging occasions, and the UE receives the paging message only through one paging occasion among the 8 paging occasions. The UE does not receive the paging channel in a time other than the specific paging occasion. In addition, one paging occasion may correspond to one TTI.

The system information includes necessary information which must be known to the UE to access an eNB. The UE must entirely receive the system information before accessing the eNB, and must always have the latest system information. In addition, since the system information is information which must be known to all UEs in one cell, the eNB periodically transmits the system information.

The system information may be divided into a master information block (MIB), a scheduling block (SB), a system information block (SIB), etc. The MIB reports a physical configuration (e.g., a bandwidth, etc.) of a corresponding cell to the UE. The SB reports transmission information of SIBs, for example, a transmission period of the SIBs, to the UE. The SIB is a set of mutually related system information. For example, a certain SIB may include only information of a neighbor cell, and another SIB may include only information of an uplink radio channel used by the UE.

The eNB can transmit the paging message to the UE to report whether there is a change in the system information. In this case, the paging message may include a system information change indicator. The UE receives the paging message according to the paging cycle. If the paging message includes the system information change indicator, the UE can receive the system information transmitted through a BCCH.

Machine type communication (MTC) refers to communication which is achieved between one machine and another machine without a human intervention. A UE used in the MTC may be an MTC device. The MTC may be called a machine to machine (M2M). A service provided through the MTC is differentiated from the existing communication service requiring the human intervention, and can be provided in various ranges. For example, various services such as tracking, metering, payment, medical field services, remote controlling, etc., can be provided through the MTC.

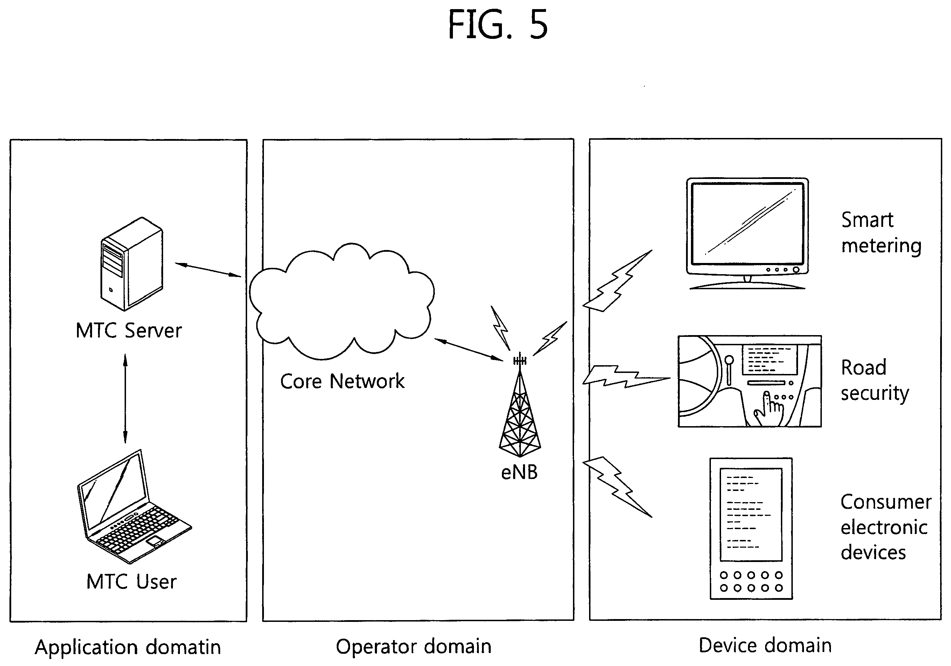

FIG. 5 shows a basic structure and communication scenario of MTC.

MTC communication can be divided into an application domain, an operator domain, and a device domain. An MTC device of the device domain can communicate with another MTC device or an MTC server through a public land mobile network (PLMN) of the operator domain. An MTC server of the application domain can provide an MTC user with a service provided through the MTC device, such as metering, road security, consumer electronic device control, etc.

In order to effectively support the MTC service, a property of the MTC device, such as low mobility, time tolerant, small data transmission, etc., of the MTC device can be taken into account. In addition, it can be assumed that many MTC devices can exist in one cell.

Hereinafter, access class barring (ACB) and extended access barring (EAB) will be described. First, the ACB will be described. It may be referred to section 4.3.1 of 3GPP TS 22.011 V10.3.0.

A service user can attain a right of preferentially accessing a radio access network by using an ACB mechanism. The ACB mechanism can provide an access priority to a UE on the basis of an allocated access class. If the service user belongs to any one of special access classes, the UE can preferentially access the network in a congested situation by comparing with other UEs.

If the UE is a member of any one access class corresponding to an allowed class and the access class is applicable to a serving network, an access attempt can be allowed. Otherwise, the access attempt is not allowed. In addition, even if a common access is allowed, the serving network can indicate that the UE is limited to perform a location registration. If the UE responds to paging, the UE may follow a typically defined procedure.

A requirement for applying the ACB is as follows.
- The serving network broadcasts to the UE a barring rate and a mean duration of access control commonly applied to access classes 0 to 9. This can also be equally applied to access classes 11 to 15.
- The network can support an access control on the basis of an access attempt type. The network can combine the access control on the basis of the access attempt type such as mobile originating (MO), mobile terminating, and location registration, etc. The barring rate and the mean duration of access control can be broadcast for each access attempt type.
- The UE determines a barring status on the basis of information provided from the serving network, and performs an access attempt according to the determination. The UE can generate a random value between 0 and 1 when a connection establishment is initialized, and can compare this value with a current barring rate to determine whether the UE is barred. If the random value is less than the barring rate and it is indicated that the access attempt type is allowed, the access attempt can be allowed. Otherwise, the access attempt is not allowed. If the access attempt is not allowed, an additional access attempt conforming to the same type is barred for a specific duration calculated on the basis of the mean duration of access control.

An RRC layer of the UE performs the ACB when an NAS layer of the UE requests an RRC connection, and an RRC connection request message is transmitted to the eNB through a random access procedure only when the ACB is passed through. To perform the ACB, the RRC layer of the UE can acquire ACB information through system information which is broadcast from a cell. The ACB information may include a different barring time and barring factor with respect to a different RRC establishment cause. The system information which transmits the ACB information may be an SIB2.

If the NAS layer of the UE requests an RRC connection, the NAS reports the RRC establishment cause, and the RRC layer of the UE performs the ACB by using a barring time and barring factor corresponding to the RRC establishment cause. When the ACB is performed, the RRC layer of the UE generates a random value and compares this value with the barring factor, and whether to perform barring can be determined according to whether the generated random value is greater than or less than the barring factor. When the barring is performed, the UE cannot transmit the RRC connection request message during the barring time.

Hereinafter, EAB will be described. It may be referred to section 4.3.4 of 3GPP TS 22.011 V10.3.0.

The EAB is a mechanism for controlling by an operator a mobile originating (MO) access attempt of UEs configured to perform the EAB in order to avoid an overload of an access network and/or a core network. In a congested situation, the operator can limit an access from the UEs configured to perform the EAB. The UEs configured to perform the EAB may be UEs which are less sensitive to a time delay than other UEs. For example, the EAB can be performed for an MTC device.

A requirement for applying the EAB is as follows.
- The UE can be configured to perform the EAB by a home PLMN (HPLMN).
- The EAB is applicable to all 3GPP radio network techniques.
- The EAB is applicable irrespective of whether the UE is in the HPLMN or a visited PLMN (VPLMN).
- The network broadcasts EAB information.
- The EAB information may include extended barring information for access classes 0 to 9.
- The UE configured to perform the EAB may use an access class allocated to determine whether an access for a network is barred when determining the EAB information which is broadcast from the network.
- If the UE configured to perform the EAB initiates an emergency call or is a member of access classes 11 to 15 allowed by the network, the UE can ignore any EAB information which is broadcast from the network. The access classes 11 to 15 may be access classes having a higher priority.
- If the network does not broadcast the EAB information, the UE can perform the ACB instead of performing the EAB.
- If the UE is not barred by the EAB information which is broadcast from the network, the UE can also perform the ACB without having to perform the EAB.

If it is determined that the operator is appropriate to apply the EAB, the network broadcasts the EAB information with respect to UEs in a specific area. The UE configured to perform the EAB can perform the EAB through the RRC layer of the UE at the request of the NAS layer of the UE if the UE is in a cell which broadcasts the EAB information. The RRC layer of the UE first performs the EAB before performing the ACB, and performs the ACB when the EAB is passed through.

Hereinafter, the proposed UE access control method will be described.

In general, when a UE receives a paging message, the UE performs an RRC connection procedure. However, if EAB is performed, a problem may occur in which the UE does not respond to the paging message for a long period of time. If the UE does not respond to the paging message, a network repetitively transmits the paging message several times in an unnecessarily wide area, which may cause a problem of resource waste.

Therefore, when a UE access is controlled to solve this problem, a method may be proposed in which ACB is directly performed without having to perform EAB if an establishment cause is mobile terminating. That is, a UE configured to sequentially perform the EAB and the ACB in order to establish an RRC connection to an eNB can perform only the ACB without having to perform the EAB if the establishment cause is the mobile terminating, and can request the RRC connection establishment to the eNB if the ACB is passed through.

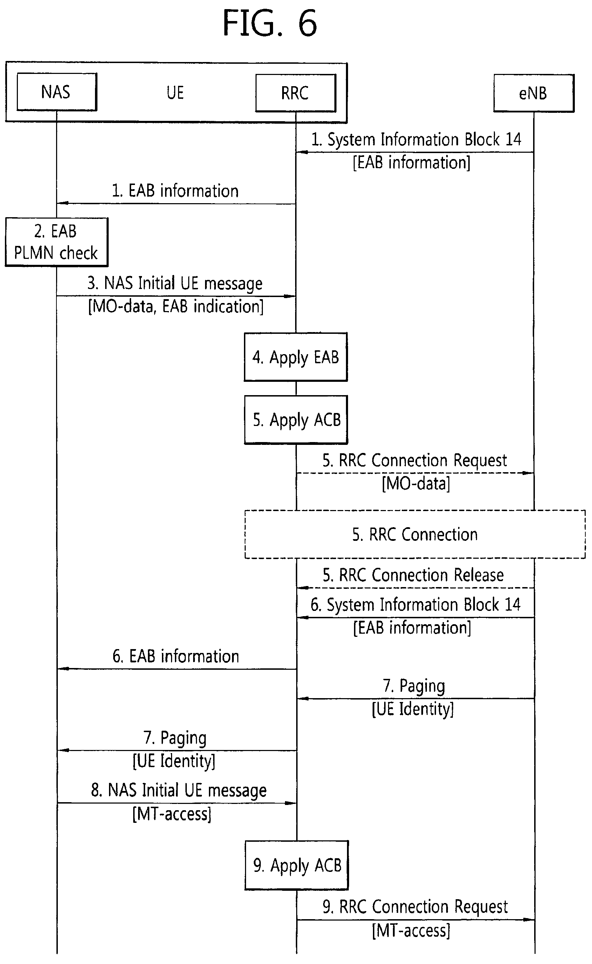

FIG. 6 shows an example of a UE access control method according to an embodiment of the present invention.
1. An eNB broadcasts an SIB 14 including EAB information to perform EAB. The EAB information may include whether a UE is barred on the basis of an access class and PLMN information of a UE to which the EAB is applied. The UE configured to perform the EAB acquires the EAB information which is broadcast from a current cell through an RRC layer. The RRC layer of the UE can deliver the acquired EAB information to an NAS layer of the UE. Meanwhile, a UE configured not to perform the EAB does not receive the SIB 14 including the EAB information.
2. The NAS layer of the UE can compare the UE's PLMN information included in the EAB information of the current cell with a PLMN selected by the UE, and can determine whether the UE has to perform the EAB in the current cell.
3. The NAS layer of the UE requests the RRC layer of the UE to establish an RRC connection in order to transmit an initial UE message (e.g., a service request, a tracking area update request, an extended service request) or the like. For this, the NAS layer of the UE reports a purpose of an access control and an establishment cause to the RRC layer of the UE together with the initial UE message.
   The NAS layer of the UE determines whether the EAB must be performed for a current RRC connection request, and if the EAB must be performed, instructs the RRC layer of the UE to perform the EAB. The NAS layer of the UE can report to the RRC layer of the UE whether the EAB must be performed according to the establishment cause. If the establishment cause is mobile terminating (MT), an emergency call, or a high priority access, the NAS layer of the UE can instruct the RRC layer of the UE not to perform the EAB. In case of the remaining establishment causes other than the above causes, for example, if the establishment cause is mobile originating (MO) data, MO signaling, a delay tolerant access, etc., the NAS layer of the UE can instruct the RRC layer of the UE to perform the EAB. It is assumed in FIG. 6 that the establishment cause is the MO data.
4. If the NAS layer instructs to perform the EAB, the RRC layer of the UE performs the EAB. The UE must know the latest EAB information which is broadcast from a cell. The EAB information indicates whether each of access classes 0 to 9 is barred. Therefore, when the EAB is performed, the RRC layer of the UE can confirm whether the access classes 0 to 9 stored in a universal subscriber identity module (USIM) of the UE is barred according to the EAB information. If the access class of the UE is barred according to the EAB information, the UE does not transmit the RRC connection request to the eNB. That is, the RRC connection establishment procedure is finished. If the access class of the UE is not barred according to the EAB information, the EAB is passed through.
5. If the RRC layer of the UE passes through the EAB, the RRC layer of the UE performs ACB. The UE performs the ACB on the basis of the latest ACB information which is broadcast from the current cell. The UE can determine whether the UE is barred on the basis of ACB information corresponding to an establishment cause of a current RRC connection request, that is, on the basis of a barring time and a barring factor. If it is not barred and thus the ACB is passed through, the UE transmits the RRC connection request to the eNB and establishes an RRC connection to the eNB. In this case, the RRC connection request may include the establishment cause of the RRC connection. Thereafter, the eNB can release the RRC connection to the UE through an RRC release message.
6. The RRC layer of the UE in an idle state without an RRC connection acquires EAB information by receiving an SIB 14 which is broadcast from a selected cell. The RRC layer of the UE can deliver the acquired EAB information to the NAS layer of the UE. The NAS layer of the UE can compare the UE's PLMN information included in the EAB information of the current cell with a PLMN selected by the UE, and can determine whether the UE has to perform the EAB in the current cell.
7. The RRC layer of the UE in the idle state periodically monitors transmission of a paging message. If the received paging message includes a UE identity, the RRC layer of the UE delivers the UE identity included in the paging message to the NAS layer of the UE.
8. If the received paging message includes the UE identity, the NAS layer of the UE instructs the RRC layer of the UE to transmit an RRC connection request in which an establishment cause is the MT access. In this case, the NAS layer of the UE can report to the RRC layer of the UE that the establishment cause is the MT access at the same time of delivering a service request message. Since the establishment cause is the MT access, the NAS layer of the UE does not instruct the RRC layer of the UE to perform the EAB.
9. Since the NAS layer of the UE does not instruct to perform the EAB, the RRC layer of the UE directly performs the ACB for the RRC connection request. If the UE is not barred as a result of performing the ACB, the UE can transmit the RRC connection request to the eNB. The RRC connection request may include the establishment cause of the RRC connection. If the UE is barred as the result of performing the ACB, the RRC connection of the UE to the eNB is barred.

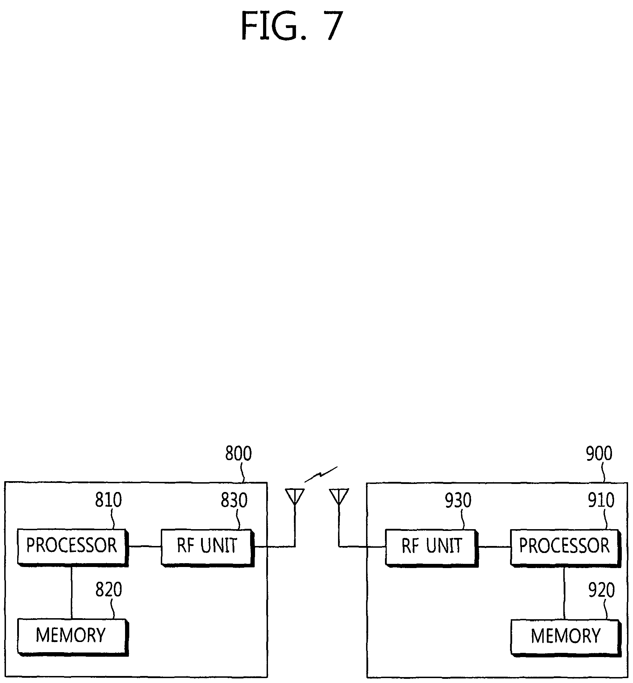

FIG. 7 is a block diagram showing a wireless communication system to implement an embodiment of the present invention.

An eNB 800 may include a processor 810, a memory 820 and a radio frequency (RF) unit 830. The processor 810 may be configured to implement proposed functions, procedures and/or methods described in this description. Layers of the radio interface protocol may be implemented in the processor 810. The memory 820 is operatively coupled with the processor 810 and stores a variety of information to operate the processor 810. The RF unit 830 is operatively coupled with the processor 810, and transmits and/or receives a radio signal.

A UE 900 may include a processor 910, a memory 920 and an RF unit 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The RF unit 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The RF units 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without departing from the scope of the appended claims.

## Claims

1. A method for controlling an access of a user equipment (10; 900), UE, in a wireless communication system, the method comprising:
receiving, by the UE (10; 900) from a base station (20; 800), first access control information including a public land mobile network, PLMN, information of the UE to which a first access control is applied;
comparing, by the UE (10; 900), the PLMN information of the UE with a PLMN selected by the UE;
determining, by the UE (10; 900), whether or not a specific condition exists, the specific condition comprising the UE is answering to paging; and
performing, by the UE (10; 900), the first access control based on the first access control information except when the specific condition is determined to exist.

2. The method of claim 1, wherein the specific condition further comprises a radio resource control, RRC, establishment cause being set to one of an emergency call and a high priority access.

3. The method of claim 1, wherein the performing the first access control comprises:
indicating the first access control information to a lower layer of the UE by a higher layer of the UE.

4. The method of claim 3, wherein the higher layer is a non-stratum access, NAS, layer.

5. The method of claim 3, wherein the lower layer is an RRC layer.

6. The method of claim 1, wherein the first access control is extended access barring, EAB.

7. The method of claim 1, further comprising:
performing a second access control when the specific condition is determined not to exist.

8. The method of claim 7, wherein the second access control is access class barring, ACB.

9. The method of claim 7, further comprising:
transmitting an RRC connection request message to the base station (20; 800) if not barred by performing the first access control.

10. The method of claim 9, wherein the RRC connection request message includes an RRC establishment cause.

11. The method of claim 10, wherein the RRC establishment cause is a mobile terminating, MT, access.

12. The method of claim 1, further comprising:
receiving a paging message including an identity, ID, of the UE (10; 900) from the base station (20; 800) prior to determining whether or not the specific condition exists.

13. The method of claim 1, wherein the first access control information is received via a system information block, SIB, 14.

14. A user equipment (10; 900), UE, in a wireless communication system, the UE comprising:
a radio frequency, RF, unit (930) for transmitting or receiving a radio signal; and
a processor (910) operatively coupled to the RF unit (930) and configured to:
receive first access control information including a public land mobile network, PLMN, information of the UE to which a first access control is applied from a base station,
compare the PLMN information of the UE with a PLMN selected by the UE;
determine whether or not a specific condition exists, the specific condition comprising the UE is answering to paging, and
perform the first access control based on the first access control information except when the specific condition is determined to exist.

## Patentansprüche

1. Verfahren zum Steuern eines Zugangs eines Benutzergeräts (10; 900), UE, in einem drahtlosen Kommunikationssystem, wobei das Verfahren umfasst:
Empfangen, mittels des UE (10; 900) von einer Basisstation (20;800), von ersten Zugangssteuerungsinformationen, die eine Öffentliches-terrestrisches-Mobilfunknetz-, PLMN-, Information des UE enthalten, auf das eine erste Zugangssteuerung angewendet wird;
Vergleichen, mittels des UE (10; 900), der PLMN-Information des UE mit einem PLMN, das mittels des UE ausgewählt ist;
Bestimmen, mittels des UE (10; 900), ob eine spezifische Bedingung existiert, wobei die spezifische Bedingung umfasst, dass das UE auf Paging antwortet; und
Durchführen, mittels des UE (10; 900), der ersten Zugangssteuerung auf der Grundlage der ersten Zugangssteuerungsinformationen, außer wenn bestimmt ist, dass die spezifische Bedingung existiert.

2. Verfahren nach Anspruch 1, wobei die spezifische Bedingung ferner umfasst, dass ein Funkressourcensteuerungs-, RRC-, Etablierungsgrund auf eines aus einem Notruf und einem Hochprioritätszugang eingestellt ist.

3. Verfahren nach Anspruch 1, wobei das Durchführen der ersten Zugangssteuerung umfasst:
Hinweisen auf die ersten Zugangssteuerungsinformationen an eine niedrigere Schicht des UE mittels einer höheren Schicht des UE.

4. Verfahren nach Anspruch 3, wobei die höhere Schicht eine Nicht-Stratumszugangs-, NAS-, Schicht ist.

5. Verfahren nach Anspruch 3, wobei die niedrigere Schicht eine RRC-Schicht ist.

6. Verfahren nach Anspruch 1, wobei die erste Zugangssteuerung erweiterte Zugangssperre, EAB, ist.

7. Verfahren nach Anspruch 1, ferner umfassend:
Durchführen einer zweiten Zugangssteuerung, wenn bestimmt ist, dass die spezifische Bedingung nicht existiert.

8. Verfahren nach Anspruch 7, wobei die zweite Zugangssteuerung Zugangsklassensperre, ACB, ist.

9. Verfahren nach Anspruch 7, ferner umfassend:
Senden einer RRC-Verbindungsanfragenachricht an die Basisstation (20; 800), wenn nicht gesperrt mittels Durchführen der ersten Zugangssteuerung.

10. Verfahren nach Anspruch 9, wobei die RRC-Verbindungsanfragenachricht einen RRC-Etablierungsgrund enthält.

11. Verfahren nach Anspruch 10, wobei der RRC-Etablierungsgrund ein mobiler Terminierungs-, MT-, Zugang ist.

12. Verfahren nach Anspruch 1, ferner umfassend:
Empfangen einer Paging-Nachricht, die eine Identität, ID, des UE (10; 900) enthält, von der Basisstation (20; 800) vor Bestimmen, ob die spezifische Bedingung existiert.

13. Verfahren nach Anspruch 1, wobei die ersten Zugangssteuerungsinformationen über einen Systeminformationsblock, SIB, (14) empfangen sind.

14. Benutzergerät (10; 900), UE, in einem drahtlosen Kommunikationssystem, wobei das UE umfasst:
eine Radiofrequenz-, RF-, Einheit (930) zum Senden oder Empfangen eines Funksignals; und
einen Prozessor (910), der operativ an die RF-Einheit (930) gekoppelt ist und ausgebildet ist, um:
erste Zugangssteuerungsinformationen zu empfangen, die eine Öffentlichesterrestrisches-Mobilfunknetz-, PLMN-, Information des UE enthalten, auf das eine erste Zugangssteuerung angewendet ist, von einer Basisstation,
die PLMN-Information des UE mit einem PLMN, das mittels des UE ausgewählt ist, zu vergleichen;
zu bestimmen, ob eine spezifische Bedingung existiert, wobei die spezifische Bedingung umfasst, dass das UE auf Paging antwortet, und
die erste Zugangssteuerung auf der Grundlage der ersten Zugangsteuerungsinformationen durchzuführen, außer wenn bestimmt ist, dass die spezifische Bedingung existiert.

## Revendications

1. Procédé pour contrôler un accès d'un équipement utilisateur (10 ; 900), UE, dans un système de communication sans fil, le procédé comprenant :
la réception, par l'UE (10 ; 900) d'une station de base (20 ; 800), d'informations de premier contrôle d'accès incluant des informations de réseau mobile terrestre public, PLMN, de l'UE sur lequel un premier contrôle d'accès est appliqué ;
la comparaison, par l'UE (10 ; 900), des informations PLMN de l'UE avec un PLMN sélectionné par l'UE ;
la détermination, par l'UE (10 ; 900), si oui ou non une condition spécifique existe, la condition spécifique comprenant que l'UE réponde à la radiomessagerie ; et
l'exécution, par l'UE (10 ; 900), du premier contrôle d'accès en se basant sur les informations de premier contrôle d'accès sauf lorsque la condition spécifique est déterminée exister.

2. Procédé selon la revendication 1, dans lequel la condition spécifique comprend en outre une cause d'établissement de contrôle de ressources radio, RRC, étant réglée sur l'un d'un appel d'urgence et d'un accès haute priorité.

3. Procédé selon la revendication 1, dans lequel l'exécution du premier contrôle d'accès comprend :
l'indication des informations de premier contrôle d'accès à une couche inférieure de l'UE par une couche supérieure de l'UE.

4. Procédé selon la revendication 3, dans lequel la couche supérieure est une couche de strate de non accès, NAS.

5. Procédé selon la revendication 3, dans lequel la couche inférieure est une couche RRC.

6. Procédé selon la revendication 1, dans lequel le premier contrôle d'accès est une interdiction d'accès étendue EAB.

7. Procédé selon la revendication 1, comprenant en outre :
l'exécution d'un second contrôle d'accès lorsque la condition spécifique est déterminée ne pas exister.

8. Procédé selon la revendication 7, dans lequel le second contrôle d'accès est une interdiction de classe d'accès ACB.

9. Procédé selon la revendication 7, comprenant en outre :
la transmission d'un message de demande de connexion RRC à la station de base (20 ; 800) si non interdit en exécutant le premier contrôle d'accès.

10. Procédé selon la revendication 9, dans lequel le message de demande de connexion RRC inclut une cause d'établissement de RRC.

11. Procédé selon la revendication 10, dans lequel la cause d'établissement de RRC est un accès entrant mobile, MT.

12. Procédé selon la revendication 1, comprenant en outre :
la réception d'un message de radiomessagerie incluant une identité, ID, de l'UE (10 ; 900) de la station de base (20 ; 800) avant de déterminer si oui ou non la condition spécifique existe.

13. Procédé selon la revendication 1, dans lequel les informations de premier contrôle d'accès sont reçues via un bloc d'informations système, SIB, 14.

14. Équipement utilisateur (10 ; 900), UE, dans un système de communication sans fil, l'UE comprenant :
une unité de fréquence radio, RF (930) pour transmettre ou recevoir un signal radio ;
et
un processeur (910) couplé de façon opérationnelle à l'unité RF (930) et configuré pour :
recevoir des informations de premier contrôle d'accès incluant des informations de réseau mobile terrestre public, PLMN, de l'UE sur lequel un premier contrôle d'accès est appliqué d'une station de base ;
comparer les informations PLMN de l'UE avec un PLMN sélectionné par l'UE ;
déterminer si oui ou non une condition spécifique existe, la condition spécifique comprenant que l'UE réponde à la radiomessagerie ; et
l'exécution du premier contrôle d'accès en se basant sur les informations de premier contrôle d'accès sauf lorsque la condition spécifique est déterminée exister.
